(19) Europäisches Patentamt
European Patent Office
Office européen des brevets

(11) **EP 2 592 392 B1**

(12) **EUROPÄISCHE PATENTSCHRIFT**

(45) Veröffentlichungstag und Bekanntmachung des Hinweises auf die Patenterteilung:
**04.09.2013 Patentblatt 2013/36**

(51) Int Cl.:
***G01D 5/347*** *(2006.01)*

(21) Anmeldenummer: **12158745.5**

(22) Anmeldetag: **09.03.2012**

(54) **Optoelektronische Lagemessvorrichtung**

Optoelectronic positioning device

Dispositif de mesure de position optoélectrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.05.2013 Patentblatt 2013/20**

(73) Patentinhaber: **Hexagon Technology Center GmbH**
**9435 Heerbrugg (CH)**

(72) Erfinder:
• **Vokinger, Urs**
**CH-9434 Au (CH)**

• **Amann, Werner**
**A-6800 Feldkirch (AT)**

(74) Vertreter: **Kaminski Harmann Patentanwälte AG**
**Landstrasse 124**
**9490 Vaduz (LI)**

(56) Entgegenhaltungen:
**WO-A1-2010/072498   DE-A1- 19 854 733**
**DE-A1-102006 024 179   US-A- 4 319 134**

**Beschreibung**

Die Erfindung betrifft eine optoelektronische Lagemessvorrichtung zum Bestimmen von Richtungen, Winkeln und/oder Längen mittels einer Beleuchtungseinrichtung, eines Codeelementes und eines Detektors.

Das Bestimmen von Richtungen, Winkeln und Längen als Lagen ist in vielen Anwendungsbereichen gefordert, wie beispielsweise in der geodätischen und industriellen Vermessung. Entwicklungen in der Winkelmesstechnik führten über mechanische Ablesevorgänge bis zur vollautomatisierten Winkelmessung nach dem heutigen Stand der Technik.

Bekannte automatisierte Lagemessvorrichtungen umfassen im Allgemeinen einen Codeträger und eine Abtasteinrichtung. Bei Winkelmesseinrichtungen ist der Codeträger üblicherweise relativ zur Abtasteinrichtung um eine Achse drehbar ausgebildet, wobei dann eine Winkellage des Codeträgers die zu messende Grösse darstellt. Der Codeträger kann zum Beispiel eine Teilung oder Codierung zur Positionsbestimmung aufweisen, wobei die Codierung auf einer Oberfläche oder Mantelfläche des Codeträgers aufgebracht sein kann.

Zur automatischen Erfassung der Lage wird der relativ zur Abtasteinrichtung bewegbare Codeträger mittels unterschiedlicher Techniken abgetastet. Zu den bekannten Abtastverfahren gehören elektronisch-magnetische, elektronische und optisch-elektronische Verfahren. Die folgenden Ausführungen beziehen sich auf optisch-elektronische Abtastverfahren und Abtasteinrichtungen, die insbesondere eine Beleuchtungseinrichtung und einen entsprechenden Detektor aufweisen.

Übliche optoelektronische Winkelsensoren zum Bestimmen eines Drehwinkels um eine Achse weisen einen Codeträger und einen optischen Detektor auf, die relativ zueinander drehbar sind. Der optische Detektor ist beispielsweise ein Photodetektor, ein CCD-Zeilen-Array oder ein CCD-Flächen-Array. Der Codeträger ist im Allgemeinen als Kreisscheibe oder als Kreisring ausgebildet und trägt entlang seines Umfangs einen optisch erfassbaren Positionscode, von dem ein Ausschnitt durch eine Beleuchtungseinrichtung auf den Detektor abgebildet wird. Im Allgemeinen dreht sich dabei der Codeträger des Winkelsensors. Es ist jedoch ebenso möglich, den Codeträger feststehend und den Detektor drehend auszubilden.

Zur Bestimmung beispielsweise von Winkelstellungen von 0° bis 360° ist die Codierung üblicherweise in einem Vollkreis angeordnet. Die Winkelauflösung des Vollkreises bestimmt sich nach Art der Codierung und nach der zum Lesen der Codierung eingesetzten Abtasteinrichtung. So wird beispielsweise durch Aufbringen eines Codes in mehreren Spuren oder durch eine feinere Teilung die Winkelauflösung gesteigert, wobei die erreichbare Auflösung aus fertigungs- und kostentechnischen Gründen beschränkt ist. Zum Lesen des Codes sind z.B. Anordnungen von einem oder mehreren Detektoren bekannt. CCD-Zeilen-Arrays oder CCD-Flächen-Arrays können beispielsweise solche Detektoren darstellen. Die Ausbildung des Codes kann durch Strukturierung einer reflektierenden Oberfläche oder auch eines durchleuchtbaren Materials erfolgen, so dass die Abbildung in Transmission, Reflexion oder in einem kombinierten Verfahren erfolgt.

Die schweizerische Patentschrift CH 658514 A5 offenbart eine solche Vorrichtung zum Messen einer Winkellage. Dabei wird eine Marke, deren Lage in Bezug auf eine Fläche von Sensoren die zu messende Grösse darstellt, auf diese Fläche abgebildet. Die Ausgangssignale der Sensoren werden in eine Auswerteschaltung geführt, die die Verteilung der Intensität der durch die Sensoren erzeugten Signale sequentiell ermittelt. Aus der Intensitätsverteilung kann die Lage der Marke in Bezug auf die Fläche von Sensoren abgeleitet werden.

Die Abmessungen einer Lagemessvorrichtung für geodätische Geräte sind vorteilhaft gering zu halten. Um eine entsprechend kleine und wenig aufwendige Bauweise zu erlauben, werden seit einiger Zeit die Beleuchtungseinrichtung und der Detektor der Lagemessvorrichtung auf einer gemeinsamen elektrisch versorgten Platine angeordnet, und nicht wie zuvor ober- und unterhalb eines Codeträgers jeweils auf einer separaten elektrisch versorgten Platine. Bei Lagemessvorrichtungen des Standes der Technik mit einer nebeneinander liegenden Anordnung des Detektors und der Beleuchtungseinrichtung werden die emittierten Strahlen beispielsweise durch ein Umlenkelement mit zwei planen, reflektierenden Flächen so umgelenkt, dass eine Abbildung des Codes durch den im Strahlgang nachgeordneten Codeträger auf dem Detektor erzeugt wird. Optional können dabei die emittierten Strahlen mittels einer der Beleuchtungsquelle direkt nachgeordneten Optik kollimiert werden.

Da ein Codeträger möglichst nahe über den Detektor geführt werden sollte, ist eine möglichst ebene und glatte Oberfläche eine wesentliche mechanische Voraussetzung. Zudem muss eine hochgenaue laterale Positionierung von Quelle und Empfänger erfolgen.

Durch Fertigungstoleranzen die Positionierung der Chips in den Komponentengehäusen signifikant streuen, sodass durch die Positionierung der Gesamtkomponente keine exakte Lage der Chips selbst zu gewährleisten ist. Diese Problematik betrifft insbesondere die Strahlungsquelle.

Die Strahlungsquelle und den Detektor nebeneinander auf derselben Platte zu plazieren, ermöglicht eine Justierung von Sensor und Quelle mit Hilfe eines Mikroskops. Im Regelfall weisen beide Komponenten unterschiedliche Bauhöhen auf. So weist normalerweise die Strahlungsquelle eine grössere Tiefe auf als das Erfassungselement.

Es ist daher eine Aufgabe der vorliegenden Erfindung, eine verbesserte optoelektronische Lagemessvorrichtung mit kompakteren Ausmassen bereitzustellen.

Eine besondere Aufgabe der vorliegenden Erfindung ist es, eine optoelektronische Lagemessvorrichtung mit einem verringerten Abstand zwischen einem Codeträger und einer eine Strahlungsquelle und ein Erfassungselement aufweisenden Trägerplatte bereitzustellen.

Eine weitere Aufgabe der vorliegenden Erfindung ist es, eine optoelektronische Lagemessvorrichtung mit einer genaueren Positionierung der Strahlungsquelle und des Erfassungselementes bereitzustellen.

Mindestens eine dieser Aufgaben wird in erfindungsgemässer Weise durch die optoelektronische Lagemessvorrichtung mit den Merkmalen des Anspruchs 1 und/oder der weiteren Ansprüche gelöst. Vorteilhafte Ausgestaltungen der Erfindung finden sich in den abhängigen Ansprüchen.

Eine erfindungsgemässe optoelektronische Lagemessvorrichtung weist einen Codeträger mit einem Positionscode und ein Trägerelement, insbesondere eine Leiterplatte, mit ein Trägerelement, insbesondere eine Leiterplatte, mit einer Strahlungsquelle, insbesondere einer LED oder einer Laserdiode, und einem Erfassungselement, insbesondere einem Sensorarray oder einem CCD-Chip, auf. Dabei sind die Strahlungsquelle und/oder das Erfassungselement in dem Trägerelement erfindungsgemäss teilweise versenkt angeordnet, sodass sie- verglichen mit einer bekannten aufgesetzten Anordnung - nur in einem verringerten Umfang über eine durch die der Codescheibe zugewandte Vorderseite des Trägerelementes definierte Ebene herausragen. Dabei wird wenigstens die höhere der beiden Komponenten Strahlungsquelle und Erfassungselement - im Regelfall die Strahlungsquelle -in das Trägerelement versenkt.

Durch einen nackten Verbau der Chips ohne Gehäuse kann dabei vorteilhaft eine hochpräzise Justierung erfolgen, die zur Realisierung geringer Abstände erforderlich ist. Insbesondere ist auch eine abdeckglaslose Ausführung vorteilhaft realisierbar. Ebenso können die optischen Elemente mit einer Kupferschicht versehen sein, sodass sie wie elektronische Komponenten auf Leiterbahnen oder Lötaugen des Trägerelementes aufgelötet werden können.

Alternativ wird die Strahlungsquelle vollständig in dem Trägerelement versenkt. Hierdurch wird zusätzlich die Definition der mechanischen Oberfläche durch den Detektor gewährleistet.

In einer Ausführungsform ist eine Leiterplatte als Trägerelement hierzu an der der Codescheibe abgewandten Seite mit einem Sackloch versehen, in das eine LED oder eine Laserdiode - mit oder ohne Gehäuse - als Strahlungsquelle eingeführt ist. An der vorderen Seite der Leiterplatte kann eine Öffnung als Blende gestaltet werden. Insbesondere kann der verbleibende Materialteil zwischen dem Sackloch und der der Codescheibe zugewandten Seite der Leiterplatte durchbohrt sein, wodurch eine Blendenwirkung erzielt wird. Ist der Materialteil, in der diese Öffnung liegt, zu dünn und daher durchscheinend, so kann sie - zum Beispiel mittels einer Kupferschicht, ähnlich einem Lötpunkt - opak gemacht werden.

In einer weiteren Ausführungsform ist eine Vertiefung auf der dem Codeträger zugewandten Seite in die Leiterplatte eingebracht, in welcher die Strahlungsquelle eingebracht und - insbesondere als "nackter" Chip ohne Gehäuse - genau positioniert werden kann.

Vorzugsweise ist auch ein Detektor als Erfassungselement versenkt angeordnet, insbesondere in einer auf der dem Codeträger zugewandten Seite der Leiterplatte eingebrachten Vertiefung, sodass an der dem Codeträger zugewandten Seite der Leiterplatte eine plane Ebene entsteht, über welcher der Codeträger bewegt wird.

Sind auf der Leiterplatte ausser der Strahlungsquelle und dem Erfassungselement weitere Elemente unterzubringen, deren oberfläche Anordnung eine Annäherung des Codeelementes behindern, so können selbstverständlich auch diese ganz oder teilweise versenkt angeordnet werden.

Optional sind die versenkt angeordneten Elemente in der Vertiefung durch Verbindungskontaktlöcher ("Viaholes") zur Rückseite des Trägerelementes elektrisch kontaktiert und mit optischem Kleber vergossen. Insbesondere können in den optischen Kleber auch Blenden- oder Linsenstrukturen integriert sein. Insbesondere wenn das Trägerelement aus mehreren Schichten Leiterplatten zusammengesetzt ist, kann alternativ auch eine Kontaktierung über Leiterbahnen einer dieser Leiterplatten erfolgen.

Wird das Element auf der dem Codeträger zugewandten Seite versenkt, so kann die Vertiefung zum Schutz der Anschlüsse mit einem optischen Kleber aufgefüllt werden. Optional kann die Oberfläche des Füllklebers zu einer optischen diffraktiven oder refraktiven Oberfläche geformt werden. Es kann alternativ auch nach dem Auffüllen mit optischem Kleber ein Abpolieren der Oberfläche des Trägerelementes erfolgen, so dass unter Einschluss der verfüllten Vertiefung eine definierte glatte mechanische Oberfläche entsteht.

Ein Auffüllen der Vertiefung ist aber nicht unbedingt notwendig. Insbesondere in dem Fall, dass die Stirnseite des versenkten Bauelementes, beispielsweise eines CCD-Chips, mit der Vorderseite des Trägerelementes zusammenfällt, kann auf einen Füllkleber auch ganz verzichtet werden. Auch können optische Bauteile wie Linsen in die Versenkung eingebracht werden, die - beispielsweise über einen Klick-Mechanismus - in der Leiterplatte oder am versenkten Bauelement selbst befestigt werden, und die Vertiefung komplett abdecken können. Insbesondere kann diese Abdeckung auch gemeinsam mit der Vorderseite der Leiterplatte eine im wesentlichen ebene Oberfläche bilden.

Eine Leiterplatte zur Versenkung der Komponenten kann vorteilhaft aus mehreren Schichten bestehen, die insbesondere zusammengeklebt werden. Die Vertiefungen und Öffnungen werden vor oder nach dem Zusammenkleben geschaffen, insbesondere durch Ausfräsen. Da beim oder nach dem Zusammenkleben der Schichten überschüssiger Klebstoff durch den Pressdruck in die Vertiefungen fliessen könnte, sind in den Vertiefungen vorzugsweise Kleberfallen vorgesehen, in die dieser Klebstoff hineinrinnen kann, wodurch die Grundfläche der Vertiefung frei von Klebstoff bleibt.

Als Vorderseite des Trägerelementes wird die Seite des Trägerelementes angesehen, die dem Codeträger zugewandt ist - vorzugsweise ist dies eine ebene Fläche.

Der Codeträger kann gemäss sämtlichen nach dem Stand der Technik bekannten Formen und aus dem Fachmann bekannten Materialien, wie zum Beispiel Kunststoff, ausgebildet sein. Insbesondere weist er eine Form mit kreisförmigem Querschnitt auf, beispielsweise die Form einer Kreisscheibe, eines Rings, eines Zylinders oder eines Hohlzylinders. Ebenso kann der Codeträger als Kreissegment ausgebildet sein. Der Codeträger kann Reflektorelemente aufweisen, sowie ganz oder teilweise lichtdurchlässig sein.

Als Detektoren können, wie aus dem Stand der Technik bekannt, insbesondere Sensorarrays, wie beispielsweise in einer Zeile aufgereihte Photodioden, CCD- oder CMOS-Sensoren, aber auch Flächensensoren mit flächig angeordneten Photodioden, CCD-, CMOS- oder PSD-Sensoren, verwendet werden. Ebenso möglich ist ein Verwenden von Detektor- oder Abtastfolien, insbesondere mit organischen Photodetektoren, zum Beispiel Photodioden, und organischen Transistoren.

Ein Einsatzbereich für erfindungsgemässe Lagemessvorrichtungen sind geodätische Messinstrumente mit der Funktion der Richtungs- und Winkelbestimmung. So sind beispielsweise Theodoliten mit horizontalem und vertikalem Teilkreis und entsprechenden Ableseeinrichtungen ausgestattet, um Horizontal- und Vertikalwinkel mit höchster Genauigkeit messen zu können. Ebenso finden Lagemessvorrichtungen in Messmaschinen aller Art, wie zum Beispiel Koordinatenmessmaschinen mit Gelenkarmen, Anwendung.

Die erfindungsgemässe Lagemessvorrichtung wird im Folgenden anhand von schematisch dargestellten rein beispielhaften Ausführungen beschrieben. Weitere Vorteile und Kennzeichen der Erfindung sind aus der folgenden Beschreibung von derzeit bevorzugten Ausführungsformen im Zusammenhang mit den anhängenden Figuren ersichtlich. In den Figuren zeigen schematisch:

Fig. 1a     Komponenten einer erfindungsgemässen Lagemessvorrichtung;

Fig. 1b     ein Trägerelement einer erfindungsgemässen Lagemessvorrichtung in einer Aufsicht;

Fig. 1c     eine erfindungsgemässe Lagemessvorrichtung in einer Seitenansicht;

Fig. 2a     eine erste Ausführungsform einer erfindungsgemässen Lagemessvorrichtung mit Umlenkspiegeln;

Fig. 2b     eine zweite Ausführungsform einer erfindungsgemässen Lagemessvorrichtung mit einer Strahlumlenkung im Codeträger;

Fig. 2c     eine dritte Ausführungsform einer erfindungsgemässen Lagemessvorrichtung mit einem als Lichtleiter ausgebildeten Codeträger;

Fig. 3a     eine Anordnung von Codeträger und Trägerelement mit auf das Trägerelement aufgesetzten Messkomponenten;

Fig. 3b     eine erfindungsgemässe Anordnung von Codeträger und Trägerelement mit teilweise in das Trägerelement versenkten Messkomponenten und verringertem Abstand;

Fig. 3c     eine Anordnung von Codeträger und Trägerelement mit vollständig in das Trägerelement versenkten Messkomponenten und minimiertem Abstand;

Fig. 4a     eine Anordnung einer Strahlungsquelle in einem Sackloch einer Leiterplatte in einer Aufsicht;

Fig. 4b     die Anordnung aus Fig. 4a in einem Querschnitt;

Fig. 4c     eine alternative Anordnung zu Fig. 4b;

Fig. 5a     eine Anordnung einer Strahlungsquelle in einer Vertiefung einer Leiterplatte in einer Aufsicht;

Fig. 5b     die Anordnung aus Fig. 5a in einem Querschnitt;

Fig. 5c     eine alternative Anordnung zu Fig. 5b;

Fig. 6a     eine Anordnung eines Erfassungselementes in einer Vertiefung einer Leiterplatte in einer Aufsicht;

Fig. 6b     die Anordnung aus Fig. 6a in einem Querschnitt;

Fig. 6c     eine alternative Anordnung zu Fig. 6b;

Fig. 7a     eine Anordnung eines Erfassungselementes in einer Vertiefung einer Leiterplatte in einer Aufsicht; und

Fig. 7b     die Anordnung aus Fig. 7a in einem Querschnitt.

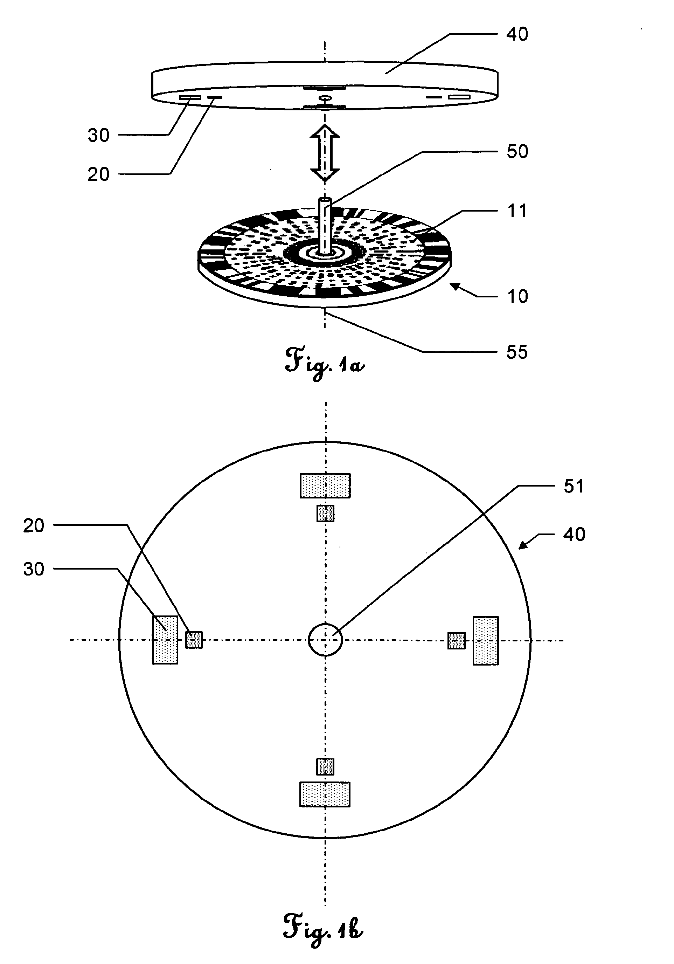

Die Figuren 1a bis 1c zeigen einen beispielhaften Aufbau einer erfindungsgemässen optoelektronischen Lagemessvorrichtung. In Figur 1a sind der Codeträger 10 und das Trägerelement 40 zur Aufnahme der optoelektronischen Bauteile dargestellt. Zur besseren Übersicht werden die beiden Komponenten im unmontierten Zustand gezeigt. Das Trägerelement 40 weist an seiner dem Codeträger zugewandten Vorderseite vier optoelektronische Messkomponentenpaare auf, bestehend aus jeweils einer Strahlungsquelle 20 und einem Erfassungselement 30. Der Codeträger 10 ist als kreisförmige Scheibe ausgestaltet und auf der Vorderseite im wesentlichen vollflächig mit einem Positionscode 11 versehen. Ein Achselement 50 verläuft entlang der Rotationsachse 55 und ermöglicht im montierten Zustand eine Rotation des Codeelementes 10 um die Rotationsachse 55 relativ zum Trägerelement 40.

In Figur 1b ist die Vorderseite des Trägerelementes 40 aus Figur 1a mit den vier optoelektronischen Messkomponentenpaaren in einer Aufsicht dargestellt. Das Trägerelement 40 weist in der Mitte eine Öffnung 51 zur Aufnahme des Achselementes 50 auf.

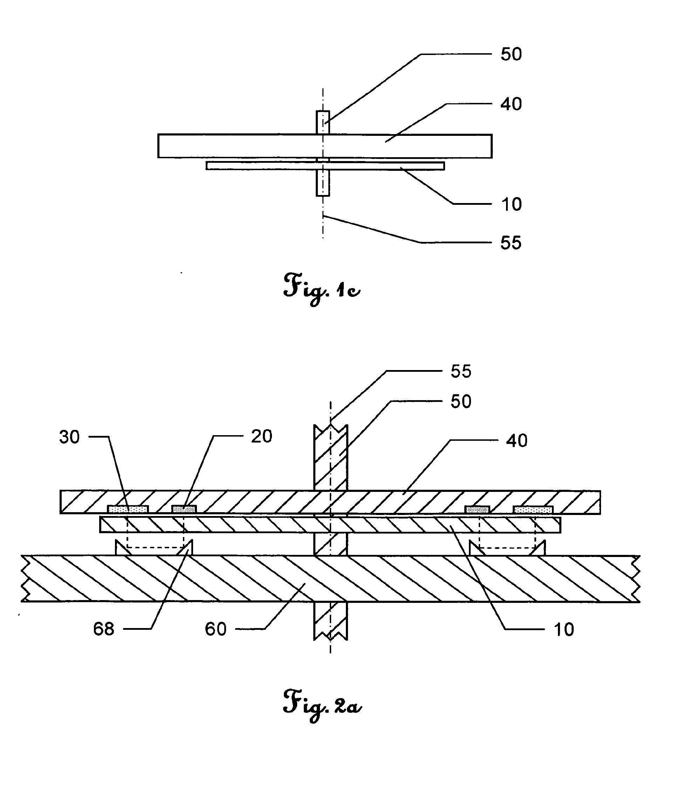

Figur 1c zeigt die optoelektronische Lagemessvorrichtung aus Figur 1a im montierten Zustand in einer Seitenansicht. Der Codeträger 10 ist parallel und mit einem möglichst geringen Abstand zu dem Trägerelement 40 und um die Rotationsachse 55 drehbar angeordnet.

In den Figuren 2a-c werden drei verschiedene beispielhafte Ausführungsformen der in den Figuren 1a bis 1c gezeigten optoelektronischen Lagemessvorrichtung dargestellt. Figur 2a zeigt eine beispielhafte Ausführungsform einer optoelektronischen Lagemessvorrichtung in einem Querschnitt. An einem Achselement 50 ist ein Codeträger 10 um die Rotationsachse 55 drehbar befestigt. Parallel zu dem Codeträger 10 ist ein Trägerelement 40 angeordnet, das mehrere Messkomponentepaare, bestehend aus Strahlungsquelle 20 und Erfassungselement 30, aufweist. Auf der dem Trägerelement 40 gegenüberliegenden Seite des Codeträgers 10 ist ein zum Trägerelement 40 in fester räumlicher Beziehung stehendes Spiegelträgerelement 60. Auf dem Spiegelträgerelement 60 sind gegenüber den Messkomponentenpaaren des Trägerelementes 40 Umlenkspiegelelemente 68 angebracht. Der Codeträger 10 ist zumindest teilweise durchlässig für die von der Strahlungsquelle 20 emittierte Strahlung. Diese trifft nach Durchquerung des Codeträgers 10 auf das Umlenkspiegelelement 68 und wird in Richtung des Erfassungselementes 30 umgelenkt.

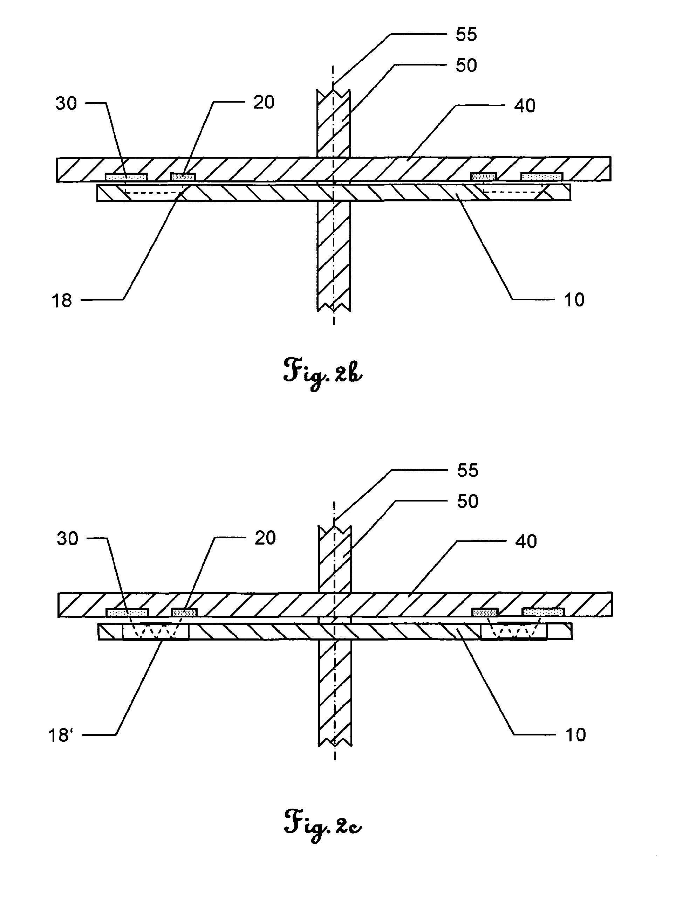

In der in Figur 2b dargestellten Ausführungsform fehlt gegenüber der in Figur 2a dargestellten das Spiegelträgerelement 60. Stattdessen sind im Codeträger 10 Strahlumlenkmittel 18 in Form von Umlenkspiegeln integriert, die die von der Strahlungsquelle emittierte Strahlung in Richtung des Erfassungselementes 30 umlenken.

In der in Figur 2c dargestellten Ausführungsform funktioniert im Unterschied zu der in Figur 2b dargestellten das in den Codeträger 10 integrierte Strahlumlenkmittel 18' wie ein Lichtleiter. Durch Verspiegelungen auf der Innenseite des Codeträgers 10 wird das Licht durch den zumindest teilweise strahlungsdurchlässigen Codeträger 10 geleitet und schliesslich auf das Erfassungselement 30 gelenkt. Alternativ kann die Strahlung diffraktiv in einen Wellenleiter ein- und ausgekoppelt werden.

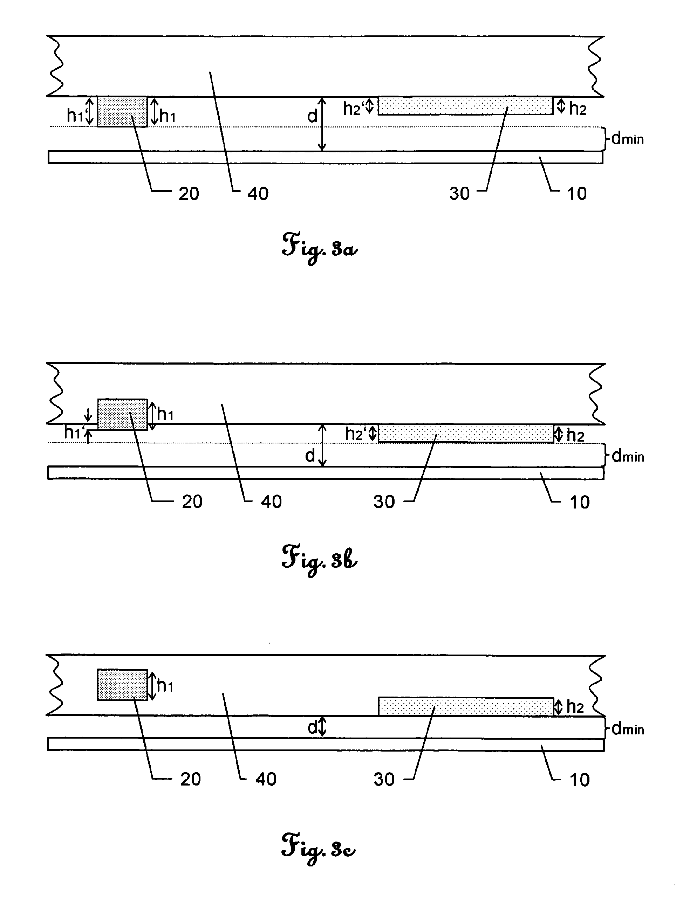

Durch die Figuren 3a-c wird das Prinzip des Verringern des Abstandes d zwischen dem Codeträger 10 und dem Trägerelement 40 durch Versenken von Messkomponenten 20,30 in das Trägerelement illustriert.

Figur 3a zeigt im Querschnitt einen Ausschnitt aus einer Lagemessvorrichtung mit einem Codeträger 10 und einem Trägerelement 40. Auf das Trägerelement 40 sind als Messkomponenten eine Strahlungsquelle 20 und ein Erfassungselement 30 aufgesetzt, wobei die beiden Messkomponenten unterschiedliche Höhen $h_1, h_2$ aufweisen. Da Strahlungsquelle 20 und Erfassungselement 30 auf die Oberfläche des Trägerelementes 40 aufgesetzt sind, sind ihre Überstände $h_1', h_2'$ über die Oberfläche des Trägerelementes 40 gleich ihren jeweiligen Höhen $h_1, h_2$.

Die Oberfläche der dem Codeträger 10 zugewandten Vorderseite des Trägerelementes 40 ist hier durch eine gerade Linie dargestellt. Die Vorderseite ist zwar vorzugsweise eine im wesentlichen ebene Fläche, aber nicht notwendigerweise. Die Oberfläche der Vorderseite kann ebenso uneben, beispielsweise gewellt oder stufig, sein, sowie Erhebungen, Vertiefungen und Löcher aufweisen. Im Falle einer solchen unebenen Oberfläche ist die Vorderseite als eine ebene Fläche durch den Punkt der kürzesten Distanz zum Codeträger definiert.

Ebenfalls dargestellt ist ein Funktionsmindestabstand $d_{min}$, der durch eine gepunktete Linie repräsentiert wird. Er ist in der Praxis durch die Funktionsweise einer erfindungsgemässen optoelektronischen Lagemessvorrichtung bedingt und in der Regel - in Abhängigkeit von Fertigungstoleranzen, gewählten Materialien, Temperaturschwankungen und weiteren Faktoren - für einen störungsfreien Betrieb der Vorrichtung nötig. Theoretisch kann der Funktionsmindestabstand $d_{min}$ aber gegen null gehen, weshalb auch Ausführungsformen mit einem vernachlässigbar kleinen Funktionsmindestabstand $d_{min}$ denkbar sind.

Der minimale Abstand d zwischen dem Codeträger 10 und dem Trägerelement 40 ist zum einen durch den Funktionsmindestabstand $d_{min}$ und zum anderen durch die Überstände $h_1', h_2'$ der Messkomponenten 20,30 bedingt. Der Abstand d kann dabei nie kleiner sein als

- der Funktionsmindestabstand $d_{min}$,
- die Summe aus dem Funktionsmindestabstand $d_{min}$ und dem Überstand $h_1'$ der Strahlungsquelle 20,

und/oder

- die Summe aus dem Funktionsmindestabstand $d_{min}$ und dem Überstand $h_2'$ des Erfassungselementes 30.

Für d muss somit gelten:

$$d \geq d_{min}$$

$$d \geq d_{min} + h_1'$$

$$d \geq d_{min} + h_2'$$

Da der Funktionsmindestabstand $d_{min}$ auch gegen null gehen kann, muss der Abstand d in jedem Fall gleich oder grösser sein als die Überstände $h_1'$,$h_2'$ der Messkomponenten 20,30.

Die höhere der beiden auf die Oberfläche des Trägerelementes 40 aufgesetzten Messkomponenten - in dieser Darstellung die Strahlungsquelle 20 - bildet die höchste Erhebung auf dem Trägerelement 40; die mögliche Untergrenze für den Abstand d ist hier daher gleich der Summe des Überstandes $h_1$ und des Funktionsmindestabstandes $d_{min}$. Um den Abstand d über die momentan gegebene Untergrenze hinaus zu verringern, ist es hier also notwendig, den Überstand $h_1'$ der Strahlungsquelle 20 zu verringern. Bis zu einem gewissen Grad könnte dies zwar durch eine Verkleinerung der Höhe $h_1$ der Strahlungsquelle 20, beispielsweise durch eine Veränderung in ihrem Aufbau, erreicht werden. Weniger aufwendig und deutlich effektiver ist jedoch die erfindungsgemässe Versenkung der Strahlungsquelle 20 im Trägerelement 40.

In Figur 3b ist die Strahlungsquelle 20 erfindungsgemäss teilweise im Trägerelement 40 versenkt. Dadurch ist der Überstand $h_1'$ der Strahlungsquelle 20 soweit reduziert, dass nun der Überstand $h_2'$ des Erfassungselementes 30 der grössere ist. Der Abstand d ist nun durch die Summe des Überstandes $h_2'$ und des Funktionsmindestabstandes $d_{min}$ bedingt und kann gegenüber dem in Figur 3a dargestellten kleiner ausfallen. Da ein möglichst geringer Abstand d angestrebt wird, ist in dieser Darstellung der Codeträger 10 näher an das Trägerelement 40 herangerückt.

In Figur 3c sind die Strahlungsquelle 20 und das Erfassungselement 30 vollständig im Trägerelement 40 versenkt - die Stirnseite der Strahlungsquelle 20 liegt auf einer Ebene hinter der Vorderseite des Trägerelementes 40, die Stirnseite des Erfassungselementes 30 genau auf der Ebene der Vorderseite. Es gibt keine Überstände $h_1'$,$h_2'$, die für eine Bestimmung des minimalen Abstandes d relevant sind, da der Überstand $h_1'$ der Strahlungsquelle 20 negativ ist, und der Überstand $h_2'$

des Erfassungselementes 30 gleich null ist. Der kleinstmögliche Abstand d entspricht hier darum dem Funktionsmindestabstand $d_{min}$ und ist somit minimiert.

Im Folgenden werden verschiedene beispielhafte Ausführungsformen dargestellt, in denen eine Messkomponente in einer Leiterplatte versenkt angeordnet ist.

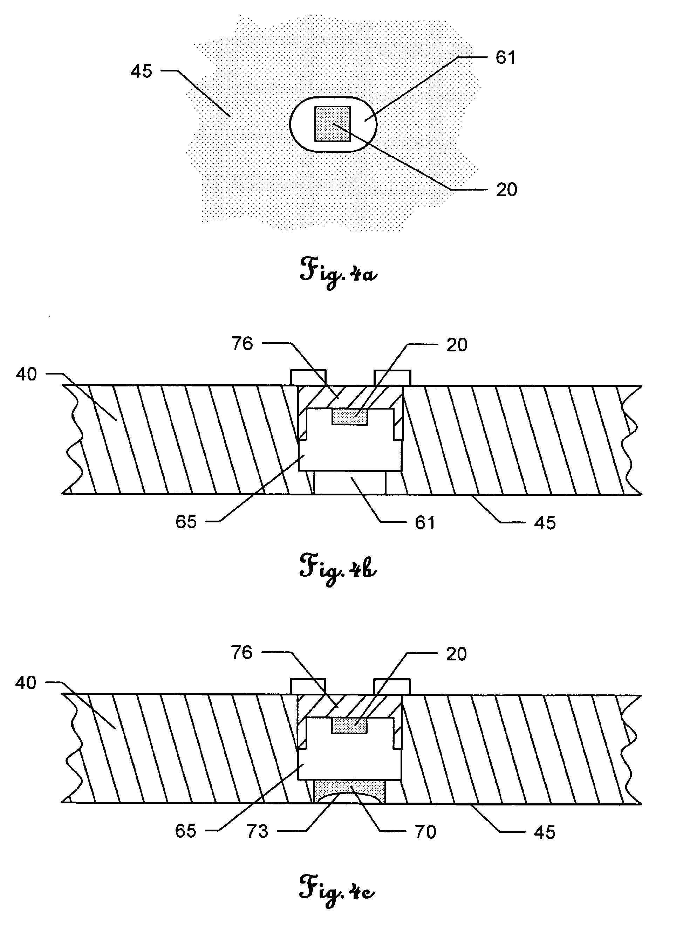

In den Figuren 4a-c ist eine Leiterplatte 40 mit einer sacklochartigen Vertiefung 65 zur Aufnahme einer

Strahlungsquelle 20, beispielsweise eines LED-Chips, dargestellt. Figur 4a zeigt eine Aufsicht auf die Vorderseite 45 (die dem Codeträger 10 zugewandte Seite) der Leiterplatte. Eine Öffnung 61 auf der Vorderseite 45 dient als Blende für die von der dahinterliegenden Strahlungsquelle 20 emittierte Messstrahlung.

Figur 4b zeigt die in Figur 4a dargestellte Anordnung in einem Querschnitt. Die Leiterplatte 40 weist an ihrer Rückseite (die vom Codeträger 10 abgewandte Seite) eine Vertiefung 65 in Form eines Sackloches auf, die insbesondere durch Fräsen erzeugt sein kann. In die Vertiefung 65 ist ein Halteelement 76 mit einer Strahlungsquelle 20 eingebracht, beispielsweise in Form eines LED-Chips mit oder ohne Gehäuse. Das Halteelement 76 ist an der Leiterplatte 40 befestigt und verschliesst die Vertiefung 65 zur Rückseite hin. Eine Öffnung 61 verbindet die Vertiefung 65 mit der Vorderseite 45 der Leiterplatte 40. Diese Öffnung 61 kann insbesondere eine Bohrung sein und dient als Blende für die von der Strahlungsquelle 20 emittierte Strahlung.

Ist die verbliebene Wand zwischen Sackloch und Vorderseite 45 zu dünn und daher durchscheinend, so kann sie beispielsweise mit einer Kupferschicht, ähnlich einem Lötpunkt, für die von der Strahlungsquelle 20 emittierte Messstrahlung undurchlässig gemacht werden.

Figur 4c zeigt eine alternative Ausführungsform der in Figur 4b dargestellten Anordnung. Dabei ist die Öffnung 61 teilweise mit einem Füllkleber 70 verfüllt. Der Füllkleber 70 weist zur Vorderseite 45 der Leiterplatte 40 hin eine diffraktive oder refraktive Oberfläche 73 auf.

In weiteren alternativen Ausführungsformen kann in der Öffnung 61 der Blende auch ein (nicht dargestelltes) optisches - refraktives oder diffraktives - Element plaziert werden. Dieses kann am Aussenrand mit einer Kupferschicht versehen sein, so dass das Element in oder auf die Öffnung gelötet werden kann. Es können auch Einkopplungselemente für eine Glasfaser montiert oder auch die Glasfaser direkt in die Öffnung eingeklebt werden.

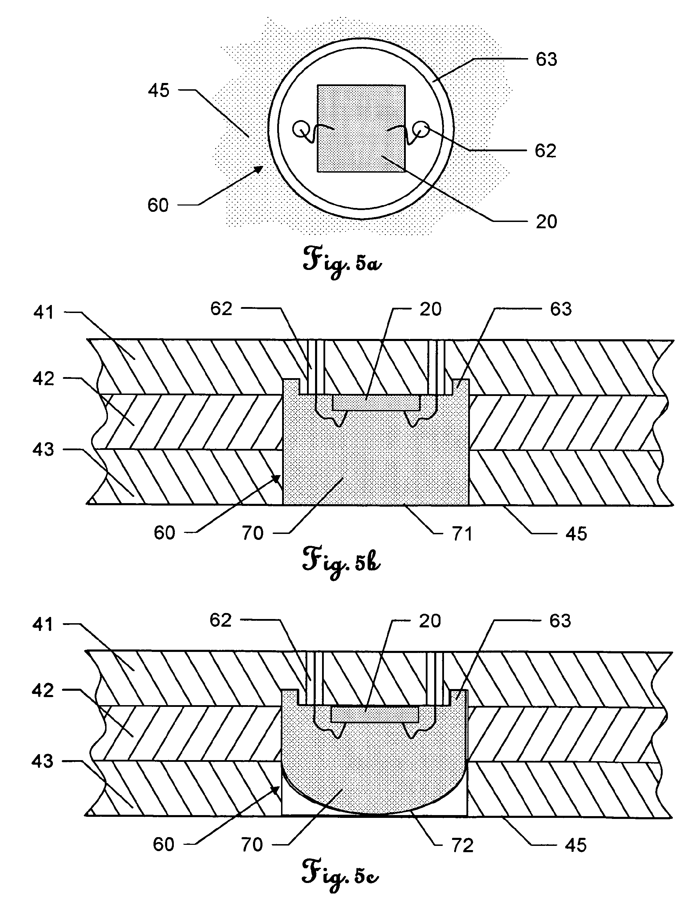

In den Figuren 5a-c ist eine aus mehreren Schichten 41-43 zusammengesetzte Leiterplatte mit einer verfüllten Vertiefung 60 zur Aufnahme einer Strahlungsquelle 20 dargestellt. Figur 5a zeigt eine Aufsicht auf die Vorderseite 45 der Leiterplatte. In der runden Vertiefung 60 ist eine Strahlungsquelle 20 montiert. Durch zwei Verbindungskontaktlöcher 62, die zur Rückseite der Leiterplatte führen, führen Anschlüsse zur Strahlungsquelle 20. Alternativ kann die Strahlungsquelle 20 auch über Leiterbahnen (nicht dargestellt) einer der Schichten, beispielsweise der Leiterplatten-Schicht 41 kontaktiert werden. Die insbesondere durch Fräsen hergestellte Vertiefung 60 weist an ihrem Aussenrand eine Kleberfalle 63 auf.

Figur 5b zeigt die in Figur 5a dargestellte Anordnung in einem Querschnitt. Die Leiterplatte besteht aus drei Schichten 41-43, welche insbesondere durch Kleben miteinander verbunden sind. Die Vertiefung 60 ist mit einem Füllkleber 70 verfüllt. Die Oberfläche 71 des Füllklebers 70 schliesst bündig mit der Oberfläche 45 der Leiterplatte ab.

Die Kleberfalle 63 ist als Rinne am Rand der Vertiefung 60 ausgeführt und wird zusammen mit der Vertiefung 60 in die

Leiterplatte gefräst. Die Kleberfalle 63 dient während der Montage dazu, überschüssigen Klebstoff aufzunehmen, der beim Zusammenpressen der einzelnen Schichten 41-43 und/oder nach dem Ausfräsen der Vertiefung 60 eventuell aus den Klebeflächen zwischen den Schichten 41-43 in die Vertiefung 60 austreten kann. Dadurch bleibt der Boden der Vertiefung 60, auf dem die Strahlungsquelle 20 montiert wird, von Klebstoff frei.

Figur 5c zeigt eine alternative Ausführungsform der in Figur 5b dargestellten Anordnung. Dabei ist die Vertiefung 60 nicht vollständig verfüllt, und der Füllkleber 70 weist eine diffraktive oder refraktive Oberfläche 72 auf.

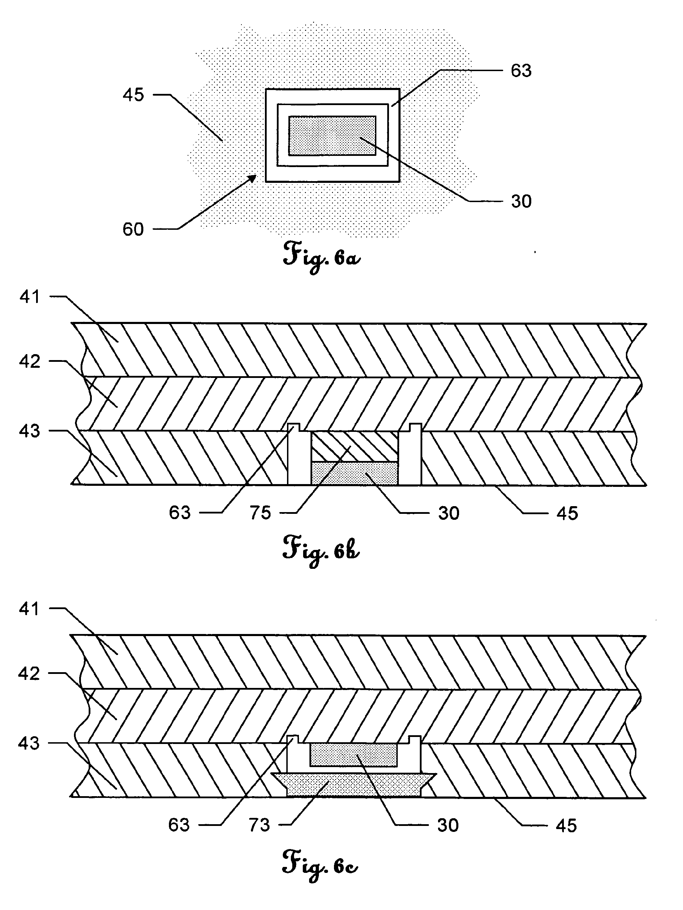

In den Figuren 6a-c ist eine aus mehreren Schichten 41-43 zusammengesetzte Leiterplatte mit einer Vertiefung 60 zur Aufnahme eines Erfassungselementes 30 dargestellt. Figur 6a zeigt eine Aufsicht auf die Vorderseite 45 der Leiterplatte. In der rechteckigen Vertiefung 60 ist ein Erfassungselement 30 montiert. Die insbesondere durch Fräsen hergestellte Vertiefung 60 weist an ihren Rändern eine Kleberfalle 63 auf.

Figur 6b zeigt die in Figur 6a dargestellte Anordnung in einem Querschnitt. Die Leiterplatte besteht aus drei Schichten 41-43, welche insbesondere durch Kleben miteinander verbunden sind. Das Erfassungselement 30 ist in der Vertiefung so angeordnet, dass seine Oberfläche in einer gemeinsamen Ebene mit der Oberfläche 45 der Leiterplatte liegt. Dazu ist das Erfassungselement 30 auf einem Zwischenstück 75 angeordnet.

Figur 6c zeigt eine alternative Ausführungsform der in Figur 6b dargestellten Anordnung. Dabei ist das Erfassungselement 30 auf dem Boden der Vertiefung angeordnet, und ein optisches Element 73 ist so an der Öffnung der Vertiefung angebracht, dass die Oberfläche des optischen Elementes 73 mit der Oberfläche 45 der Leiterplatte bündig abschliesst.

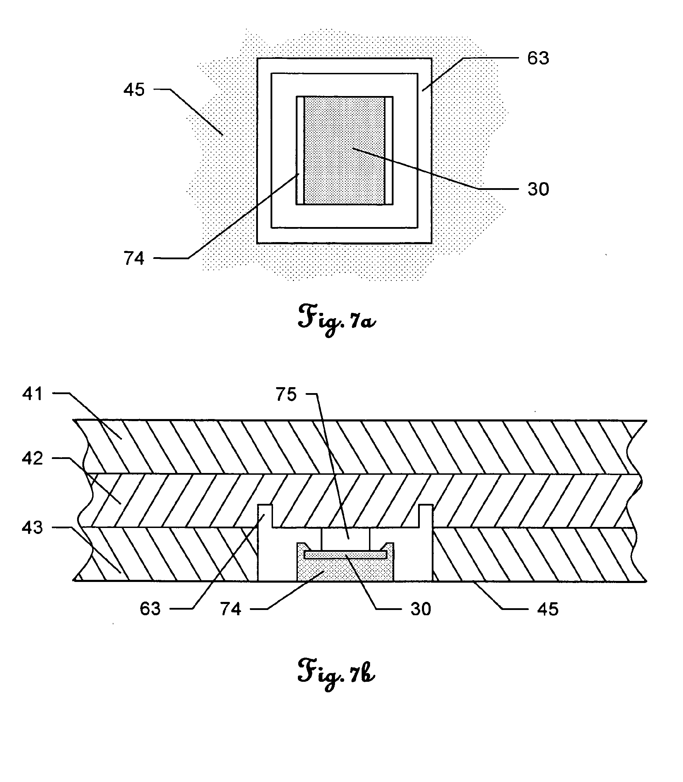

In den Figuren 7a-b ist eine aus mehreren Schichten 41-43 zusammengesetzte Leiterplatte mit einer Vertiefung 60 zur Aufnahme eines Erfassungselementes 30 dargestellt. Figur 7a zeigt eine Aufsicht auf die Vorderseite 45 der Leiterplatte. In der rechteckigen Vertiefung 60 ist ein Erfassungselement 30 mit einem aufgesteckten optischen Element 74 montiert. Die insbesondere durch Fräsen hergestellte Vertiefung 60 weist an ihren Rändern eine Kleberfalle 63 auf.

Figur 7b zeigt die in Figur 7a dargestellte Anordnung in einem Querschnitt. Die Leiterplatte besteht auch hier aus drei Schichten 41-43. Das Erfassungselement 30 ist auf einem Zwischenstück 75 angeordnet. Am Erfassungselement 30 ist ein aufgestecktes optisches Element 74 befestigt. Die Oberfläche des optischen Elementes 74 liegt dabei in einer gemeinsamen Ebene mit der Oberfläche 45 der Leiterplatte.

Es versteht sich, dass diese dargestellten Figuren nur mögliche Ausführungsbeispiele schematisch darstellen. Die verschiedenen Ansätze können ebenso miteinander sowie mit Verfahren und Geräten des Stands der Technik kombiniert werden.

## Patentansprüche

1. Optoelektronische Lagemessvorrichtung, aufweisend

   • einen Codeträger (10), der einen optisch erfassbaren Positionscode (11) trägt,
   • eine Strahlungsquelle (20) zur Emission von optischer Strahlung auf den Codeträger (10) und
   • ein Erfassungselement (30) mit einer Vielzahl von lichtempfindlichen Empfangsbereichen (31) zum Empfang wenigstens eines Teiles der optischen Strahlung, wodurch ein vom Positionscode (11) abhängiges Abtastsignal erzeugbar ist und somit eine Lage des Codeträgers (10) relativ zum Erfassungselement (30) erfassbar ist,

   wobei

   • die Messkomponenten Strahlungsquelle (20) und Erfassungselement (30)

      • in fester räumlicher Beziehung zueinander und jeweils mit einer dem Codeträger (10) zugewandten Stirnseite auf einem Trägerelement (40) angeordnet sind,
      • zwischen der Stirnseite und einer Basis jeweils eine Höhe ($h_1$, $h_2$) aufweisen, und
      • zwischen der Stirnseite und einer dem Codeträger (10) zugewandten Vorderseite (45) des Trägerelementes (40) jeweils einen Überstand ($h_1'$, $h_2'$) aufweisen,

      • der Codeträger (10) mit einem Freiheitsgrad, insbesondere rotatorisch oder entlang einer Achse, beweglich ist, und
      • der Codeträger (10) und das Trägerelement (40) mit einem festen räumlichen Abstand (d) zueinander angeordnet sind, der

• mindestens so gross ist wie der Überstand ($h_1$') der Strahlungsquelle (20), und
• mindestens so gross ist wie der Überstand ($h_2$') des Erfassungselementes (30),

**dadurch gekennzeichnet, dass**
von den Messkomponenten Strahlungsquelle (20) und Erfassungselement (30) wenigstens diejenige Messkomponente (20, 30) mit der grösseren Höhe ($h_1$, $h_2$) auf dem Trägerelement (40) jeweils so auf einer im Vergleich zur Vorderseite (45) weiter vom Codeträger (10) entfernt liegenden Ebene angeordnet ist, dass ihr Überstand ($h_1$', $h_2$') geringer ist als ihre Höhe ($h_1$, $h_2$),
wobei der Überstand ($h_1$, $h_2$') jeweils grösser als Null ist,
insbesondere wodurch für den Abstand (d) ein geringerer Wert wählbar ist, verglichen mit einer Vorrichtung, bei welcher die Messkomponenten (20, 30) auf einer durch die Vorderseite (45) definierten Ebene angeordnet sind.

2. Optoelektronische Lagemessvorrichtung nach Anspruch 1, **dadurch gekennzeichnet, dass**
die Strahlungsquelle (20) und/oder das Erfassungselement (30)

• auf dem Trägerelement (40) in jeweils einer Vertiefung (60, 65) angeordnet sind,
• ohne Gehäuse, insbesondere abdeckglaslos, verbaut sind und/oder
• eine Kupferschicht aufweisen.

3. Optoelektronische Lagemessvorrichtung nach Anspruch 1 oder Anspruch 2,
**dadurch gekennzeichnet, dass**
die Strahlungsquelle (20) und das Erfassungselement (30) auf dem Trägerelement (40) jeweils auf einer Ebene angeordnet sind, die weiter vom Codeträger (10) entfernt liegt als die Vorderseite (45) des Trägerelementes (40).

4. Optoelektronische Lagemessvorrichtung nach einem der Ansprüche 1 bis 3,
**dadurch gekennzeichnet, dass**
die Strahlungsquelle (20) in einer Vertiefung (60) auf der Vorderseite (45) des Trägerelementes (40) angebracht ist.

5. Optoelektronische Lagemessvorrichtung nach einem der vorangegangenen Ansprüche,
**dadurch gekennzeichnet, dass**
das Erfassungselement (30) in einer Vertiefung (60) auf der Vorderseite (45) des Trägerelementes (40) angebracht ist.

6. Optoelektronische Lagemessvorrichtung nach Anspruch 5, **dadurch gekennzeichnet, dass**

• das Erfassungselement (30) mit der dem Codeträger (10) zugewandten Seite (45) des Trägerelementes (40) eine ebene Fläche bildet, oder
• ein in der Vertiefung (60) vor dem Erfassungselement (30) angebrachtes optisches Bauteil (73, 74), insbesondere mittels eines Klick-mechanismus am Trägerelement (30) oder am Erfassungselement befestigt, mit der Vorderseite (45) des Trägerelementes (40) eine ebene Fläche bildet.

7. Optoelektronische Lagemessvorrichtung nach einem der Ansprüche 4 bis 6,
**dadurch gekennzeichnet, dass**
die Vertiefung (60) ganz oder teilweise mit einem optischen Füllkleber (70) verfüllt ist, der

• eine ebene Oberfläche (71) aufweist, die mit der Vorderseite (45) des Trägerelementes (40) eine ebene Fläche bildet, oder
• an der Vorderseite (45) des Trägerelementes (40) eine optische diffraktive oder refraktive Oberfläche (72, 73) aufweist.

8. Optoelektronische Lagemessvorrichtung nach einem der Ansprüche 4 bis 7,
**dadurch gekennzeichnet, dass**
die Vertiefung (60) ein Verbindungskontaktloch (62) und/oder eine Kleberfalle (63) aufweist.

9. Optoelektronische Lagemessvorrichtung nach einem der vorangegangenen Ansprüche,
**dadurch gekennzeichnet, dass**
der Codeträger (10)

• als kreisförmige Scheibe ausgestaltet ist,
• um eine Achse (55) drehbar ist, wobei vom Erfassungselement (30) ein Drehwinkel um die Achse (55) erfassbar ist, und/oder
• Strahlumlenkmittel (18, 18'), insbesondere in Form von Spiegeln und/oder Wellenleitern, aufweist, um die von der Strahlungsquelle (20) emittierte Strahlung, insbesondere durch Reflexion, auf das Erfassungselement (30) zu lenken.

10. Optoelektronische Lagemessvorrichtung nach einem der vorangegangenen Ansprüche,
**dadurch gekennzeichnet, dass**

• die Strahlungsquelle (20) als LED oder Laserdiode ausgestaltet ist, und/oder
• das Erfassungselement (30) als Sensorarray ausgestaltet ist, insbesondere als CCD-Chip oder CMOS-Array.

11. Optoelektronische Lagemessvorrichtung nach einem der vorangegangenen Ansprüche,

**dadurch gekennzeichnet, dass**

das Trägerelement (40)

- eine Leiterplatte ist und/oder
- aus mehreren Schichten (41, 42, 43) zusammengesetzt ist, insbesondere geklebt.

12. Optoelektronische Lagemessvorrichtung nach einem der vorangegangenen Ansprüche,
**dadurch gekennzeichnet, dass**
der Positionscode (11) im wesentlichen vollflächig auf der dem Trägerelement (40) zugewandten Seite des Codeträgers (10) angebracht ist.

13. Verfahren zur Herstellung einer optoelektronischen Lagemessvorrichtung nach Anspruch 1,
**dadurch gekennzeichnet, dass**
zur Bewirkung einer möglichen Verringerung des Abstandes (d) wenigstens erfolgt

- ein Erzeugen einer Vertiefung (60, 65) in dem Trägerelement (40), insbesondere mittels Fräsen, und
- ein Montieren der Strahlungsquelle (20) und/ oder des Erfassungselementes (30) in der Vertiefung (60, 65).

**Claims**

1. Optoelectronic position measuring apparatus, comprising

 - a code carrier (10), which carries an optically detectable position code (11),
 - a radiation source (20) for emitting optical radiation onto the code carrier (10) and
 - a detection element (30) having a multiplicity of light-sensitive receiving regions (31) for receiving at least part of the optical radiation, as a result of which a scanning signal dependent on the position code (11) can be generated and a position of the code carrier (10) relative to the detection element (30) can thus be detected,

 wherein

 - the measuring components radiation source (20) and detection element (30)

 - are arranged in a fixed spatial relationship with respect to one another and in each case with an end side facing the code carrier (10) on a carrier element (40),
 - in each case have a height ($h_1$, $h_2$) between the end side and a base, and
 - in each case have an overhang ($h_1$', $h_2$') between the end side and a front side (45) of the carrier element (40), said front side facing the code carrier (10),

 - the code carrier (10) is movable with one degree of freedom, in particular rotationally or along an axis, and
 - the code carrier (10) and the carrier element (40) are arranged at a fixed spatial distance (d) with respect to one another, said distance

 - being at least of the same magnitude as the overhang ($h_1$') of the radiation source (20),
 and
 - being at least of the same magnitude as the
 overhang ($h_2$') of the detection element (30),

**characterized in that**
of the measuring components radiation source (20) and detection element (30) at least that measuring component (20, 30) having the greater height ($h_1$, $h_2$) is arranged on the carrier element (40) respectively on a plane situated further away from the code carrier (10) in comparison with the front side (45) such that its overhang ($h_1$', $h_2$') is less than its height ($h_1$, $h_2$)
wherein the overhang ($h_1$', $h_2$') is in each case greater than zero,
in particular whereby a smaller value can be chosen for the distance (d), compared with an apparatus in which the measuring components (20, 30) are arranged on a plane defined by the front side (45).

2. Optoelectronic position measuring apparatus according to Claim 1,
**characterized in that**
the radiation source (20) and/or the detection element (30)

 - are/is arranged on the carrier element (40) in a respective depression (60, 65),
 - are/is constructed without a housing, in particular in a manner free of covering glass,
 and/or
 - have/has a copper layer.

3. Optoelectronic position measuring apparatus according to Claim 1 or Claim 2,
**characterized in that**
the radiation source (20) and the detection element (30) are arranged on the carrier element (40) respectively on a plane situated further away from the code carrier (10) than the front side (45) of the carrier element (40).

4. Optoelectronic position measuring apparatus according to any one of Claims 1 to 3, **characterized in that** the radiation source (20) is fitted in a depression (60) on the front side (45) of the carrier element (40).

5. Optoelectronic position measuring apparatus according to any one of the preceding claims, **characterized in that** the detection element (30) is fitted in a depression (60) on the front side (45) of the carrier element (40).

6. Optoelectronic position measuring apparatus according to Claim 5, **characterized in that**

   • the detection element (30) forms a planar area with the side (45) of the carrier element (40) facing the code carrier (10), or
   • an optical component (73, 74) fitted in front of the detection element (30) in the depression (60), in particular fixed to the carrier element (30) or to the detection element by means of a click mechanism, forms a planar area with the front side (45) of the carrier element (40).

7. Optoelectronic position measuring apparatus according to any one of Claims 4 to 6, **characterized in that** the depression (60) is filled wholly or partly with an optical filling adhesive (70), which

   • has a planar surface (71) that forms a planar area with the front side (45) of the carrier element (40), or
   • has an optical diffractive or refractive surface (72, 73) at the front side (45) of the carrier element (40).

8. Optoelectronic position measuring apparatus according to any one of Claims 4 to 7, **characterized in that** the depression (60) has a via hole (62) and/or an adhesive trap (63).

9. Optoelectronic position measuring apparatus according to any one of the preceding claims, **characterized in that** the code carrier (10)

   • is configured as a circular disc,
   • is rotatable about an axis (55), wherein an angle of rotation about the axis (55) can be detected by the detection element (30), and/or
   • has beam deflection means (18, 18') in particular in the form of mirrors and/or waveguides, in order to direct the radiation emitted by the radiation source (20) onto the detection element (30), in particular by reflection.

10. Optoelectronic position measuring apparatus according to any one of the preceding claims, **characterized in that**

    • the radiation source (20) is configured as an LED or a laser diode, and/or
    • the detection element (30) is configured as a sensor array, in particular as a CCD chip or a CMOS array.

11. Optoelectronic position measuring apparatus according to any one of the preceding claims, **characterized in that** the carrier element (40)

    • is a printed circuit board, and/or
    • is assembled, in particular adhesively bonded, from a plurality of layers (41, 42, 43).

12. Optoelectronic position measuring apparatus according to any one of the preceding claims, **characterized in that** the position code (11) is fitted substantially over the whole area on that side of the code carrier (10) which faces the carrier element (40).

13. Method for producing an optoelectronic position measuring apparatus according to Claim 1, **characterized in that** in order to bring about a possible reduction of the distance (d), at least the following are effected

    • production of a depression (60, 65) in the carrier element (40), in particular by means of milling, and
    • mounting of the radiation source (20) and/or the detection element (30) in the depression (60, 65).

**Revendications**

1. Dispositif optoélectronique de mesure de position présentant :

   • un support de code (10) qui porte un code de position (11) pouvant être détecté de manière optique,
   • une source de rayonnement (20) pour l'émission de rayonnement optique (3) sur le support de code (10) et
   • un élément de détection (30) avec une multitude de domaines de réception sensibles à la lumière (31) pour la réception d'au moins une partie du rayonnement optique si bien qu'un signal de balayage qui dépend du code de position (11) peut être généré et qu'une position du support de code (10) par rapport à l'élément de détection (30) peut ainsi être détectée,

cependant que

   • les composantes de mesure source de rayonnement (20) et élément de détection (30)

      • sont placées sur un élément de support (40) en relation spatiale fixe l'une par rapport à l'autre et chacune avec un côté frontal tourné vers le support de code (10),
      • présentent, entre le côté frontal et une base, respectivement une hauteur ($h_1$, $h_2$) et
      • présentent, entre le côté frontal et un côté antérieur (45) de l'élément de support (10), côté antérieur qui est tourné vers le support de code (10), respectivement une partie en débordement ($h_1$', $h_2$'),

   • le support de code (10) est mobile avec un degré de liberté, en particulier en rotation ou le long d'un axe, et
   • le support de code (10) et l'élément de support (40) sont placés l'un par rapport à l'autre avec une distance spatiale fixe (d) qui

      • est au moins aussi grande que la partie en débordement ($h_1$') de la source de rayonnement (20) et
      • est au moins aussi grande que la partie en débordement ($h_2$') de

   l'élément de détection (30),

   **caractérisé en ce**
   **que**, parmi les composantes de mesure source de rayonnement (20) et élément de détection (30), au moins la composante de mesure (20, 30) avec la plus grande hauteur ($h_1$, $h_2$) sur l'élément de support (40) est placée respectivement de telle manière sur un plan situé plus éloigné du support de code (10) par comparaison avec le côté antérieur (45), que sa partie en débordement ($h_1$', $h_2$') est plus petite que sa hauteur ($h_1$, $h_2$),
   cependant que la partie en débordement ($h_1$', $h_2$') est respectivement supérieure à zéro,
   en particulier si bien que l'on peut choisir pour la distance (d) une valeur plus faible, comparée à un dispositif pour lequel les composantes de mesure (20, 30) sont placées sur un plan défini par le côté antérieur (45).

2. Dispositif optoélectronique de mesure de position selon la revendication 1, **caractérisé en ce**
   **que** la source de rayonnement (20) et/ou l'élément de détection (30)

      • sont placés sur l'élément de support (40) chacun dans un évidement (60, 65),
      • sont installés sans bâti, en particulier sans verre de recouvrement, et/ou
      • présentent une couche de cuivre.

3. Dispositif optoélectronique de mesure de position selon la revendication 1 ou la revendication 2, **caractérisé en ce**
   **que** la source de rayonnement (20) et l'élément de détection (30) sont placés sur l'élément de support (40) respectivement sur un plan qui est situé plus éloigné du support de code (10) que le côté antérieur (45) de l'élément de support (40).

4. Dispositif optoélectronique de mesure de position selon l'une des revendications 1 à 3, **caractérisé en ce**
   **que** la source de rayonnement (20) est installée dans un évidement (60) sur le côté antérieur (45) de l'élément de support (40).

5. Dispositif optoélectronique de mesure de position selon l'une des revendications précédentes, **caractérisé en ce**
   **que** l'élément de détection (30) est installé dans un évidement (60) sur le côté antérieur (45) de l'élément de support (40).

6. Dispositif optoélectronique de mesure de position selon la revendication 5, **caractérisé en ce que**

      • l'élément de détection (30) forme une surface plane avec le côté (45) de l'élément de support (40), côté qui est tourné vers le support de code (10) ou
      • un composant optique (73, 74) installé dans l'évidement (60) devant l'élément de détection (30) est fixé en particulier au moyen d'un mécanisme à cliqueter sur l'élément de support (30) ou sur l'élément de détection, forme une surface plane avec le côté antérieur (45) de l'élément de support (40).

7. Dispositif optoélectronique de mesure de position selon l'une des revendications précédentes 4 à 6, **caractérisé en ce que**
   l'évidement (60) est rempli entièrement ou partiellement avec une colle de remplissage optique (70) qui

      • présente une surface plane (71) qui forme une surface plane avec le côté antérieur (45) de l'élément de support (40) ou
      • présente une surface diffractive ou réfractive optique (72, 73) sur le côté antérieur (45) de l'élément de support (40).

8. Dispositif optoélectronique de mesure de position selon l'une des revendications précédentes 4 à 7,

**caractérisé en ce**
**que** l'évidement (60) présente un trou de contact de jonction (62) et/ou un piège à colle (63).

9.  Dispositif optoélectronique de mesure de position selon l'une des revendications précédentes, **caractérisé en ce que** le support de code (10)

    • est configuré comme un disque circulaire,
    • est rotatif autour d'un axe (55), un angle de rotation autour de l'axe (55) pouvant être détecté par l'élément de détection (30) et/ou
    • présente des moyens de déviation de rayonnement (18, 18'), en particulier en forme de miroirs et/ou de guides d'ondes, pour dévier le rayonnement émis par la source de rayonnement (20) sur l'élément de détection (30), en particulier par réflexion.

10. Dispositif optoélectronique de mesure de position selon l'une des revendications précédentes, **caractérisé en ce que**

    • la source de rayonnement (20) est configurée comme LED ou comme diode laser et/ou
    • l'élément de détection (30) est configuré comme un groupe de capteurs, en particulier comme une puce CCD ou comme un groupe CMOS.

11. Dispositif optoélectronique de mesure de position selon l'une des revendications précédentes, **caractérisé en ce que** l'élément de support (40)

    • est une carte imprimée et/ou
    • est assemblé en plusieurs couches (41, 42, 43), en particulier est collé.

12. Dispositif optoélectronique de mesure de position selon l'une des revendications précédentes, **caractérisé en ce que** le code de position (11) est installé substantiellement sur toute la surface sur le côté du support de code (10) qui est tourné vers l'élément de support (40).

13. Procédé pour la fabrication d'un dispositif optoélectronique de mesure de position selon la revendication 1, **caractérisé en ce que**, pour provoquer une réduction possible de la distance (d), il y a lieu au moins

    • une production d'un évidement (60, 65) dans l'élément de support (40), en particulier par fraisage, et
    • un montage de la source de rayonnement (20) et/ou de l'élément de détection (30) dans l'évidement (60, 65).

40

30

20

50

11

10

55

**Fig. 1a**

51

40

20

30

**Fig. 1b**

Fig. 1c

Fig. 2a

*Fig. 2b*

*Fig. 2c*

Fig. 3a

Fig. 3b

Fig. 3c

*Fig. 4a*

*Fig. 4b*

*Fig. 4c*

*Fig. 5a*

*Fig. 5b*

*Fig. 5c*

Fig. 6a

Fig. 6b

Fig. 6c

45

63

30

74

**Fig. 7a**

41

42

43

75

63   74   30   45

**Fig. 7b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 658514 A5